# FASCICULE DE BREVET EUROPEEN

(11) **EP 1 445 170 B1**
(45) Date de publication et mention de la délivrance du brevet: **01.06.2005**
(21) Numéro de dépôt: 03293054.7
(22) Date de dépôt: 05.12.2003
(51) Int. Cl.: B62D 5/04

(54) **Dispositif d'assemblage d'un ensemble de direction assistée électrique avec un ensemble de corps de colonne de direction de véhicule automobile**
Verbindungsvorrichtung zwischen einer elektrischen Hilfsantriebseinheit und einem Lenksäulengehäuse eines Kraftfahrzeuges
Assembly device between an electrical assist unit and a motor vehicle steering column body

(30) Priorité: 10.02.2003 FR 0301575
(43) Date de publication de la demande: 11.08.2004
(73) Titulaire: NACAM FRANCE S.A., 41000 Vendome (FR)
(72) Inventeur: Daniel, Philippe, 41100 Villiers sur Loir (FR); Briere, Guillaume, 41100 Vendome (FR)
(74) Mandataire: Cabinet Martinet & Lapoux

(56) Documents cités:
- EP-A- 0 860 346

## Description

L'invention se rapporte à un dispositif d'assemblage d'un ensemble de direction assistée électrique avec un ensemble de corps de colonne de direction de véhicule automobile, tel que défini dans le préambule de la revendication 1 et connu par exemple du document EP 0 860 346 A. La colonne de direction comporte une partie haute de colonne et une partie intermédiaire de colonne. La partie haute de colonne est reliée au volant de direction. La partie intermédiaire de colonne est reliée d'une part à la partie haute de colonne, et d'autre part à l'entrée de mouvement du boîtier de direction.

Afin d'avoir un fonctionnement correct de la colonne de direction avec la direction assistée électrique, il faut que l'axe de l'ensemble de direction assistée électrique soit parfaitement aligné avec l'axe du corps de colonne, qui est l'axe de la partie haute de colonne appelé axe de direction.

Le but de la présente invention est de proposer un dispositif d'assemblage d'un ensemble de direction assistée électrique avec un ensemble de corps de colonne de direction, qui permette un alignement parfait entre les deux ensembles suivant l'axe de direction ; tout en permettant un montage aisé dans les architectures existantes en faisant appel à un assemblage ayant un encombrement axial minimum.
L'invention se rapporte à un dispositif d'assemblage d'un ensemble de direction assistée électrique avec un ensemble de corps de colonne de direction de véhicule automobile. L'ensemble de corps de colonne comporte un tube-corps dans lequel est monté un arbre de direction tournant suivant un axe de direction, le corps de colonne étant monté sur un ensemble support solidaire de la structure du véhicule. Selon l'invention :
- le corps de colonne comporte un montant transversal avec une face d'assemblage transversale, sensiblement perpendiculaire à l'axe de direction ;
- l'ensemble de direction assistée électrique comporte une face d'appui sensiblement perpendiculaire à l'axe de direction ;
- le réglage de l'assemblage s'effectuant suivant trois axes perpendiculaires Ox, Oy, Oz, l'axe Ox étant l'axe de direction coupant la face d'assemblage transversale du corps de colonne en 0, l'axe Oz étant dans le plan vertical de l'axe de direction, et l'axe Oy étant dans un plan perpendiculaire au plan vertical.

Une plaque rotule est agencée de manière à ce qu'elle permette un double réglage en rotation par rapport aux axes Oy et Oz de l'assemblage entre l'ensemble de corps de colonne et ladite plaque rotule et cet assemblage avec l'ensemble de direction assistée électrique.

Des moyens de liaison sont agencés entre la plaque rotule et la face d'appui de la direction assistée électrique de manière à permettre un double réglage en translation par rapport aux axes Oy et Oz dudit assemblage.

La plaque rotule est disposée entre la direction assistée électrique et le corps de colonne.

Des moyens d'assemblage sont agencés entre le montant transversal du corps de colonne et la plaque rotule. Les moyens de liaison comporte des moyens d'assemblage qui sont agencés entre la plaque rotule et la face d'appui de la direction assistée électrique, de manière à ce que l'axe de la direction assistée électrique et l'axe du corps de colonne soient parfaitement alignés l'un par rapport à l'autre suivant l'axe de direction.

Selon l'invention :
- la plaque rotule comporte une face avec une portion en forme de couronne sphérique d'axe Ox qui entoure un trou de passage de l'arbre de direction ;
- la face d'assemblage du montant transversal comporte une portion en forme de couronne sphérique d'axe Ox qui entoure un trou de passage de l'arbre de direction ;
- chacune des portions sphériques étant agencée de manière à former une portée sphérique l'une par rapport à l'autre ;
- chaque portion sphérique ayant au moins deux trous de passage de l'élément d'assemblage entre le montant transversal et la plaque rotule ;
- les trous de passage de l'une des deux portions sphériques ayant un diamètre plus grand que le diamètre des trous de passage correspondants de l'autre portion sphérique qui sont ajustés avec le diamètre de l'élément d'assemblage correspondant ;
- cette différence de diamètre étant prévue pour permettre de disposer et fixer correctement la plaque rotule sur le corps de colonne par double réglage en rotation par rapport aux axes Oy et Oz.

Avantageusement selon l'invention, la portion sphérique de la plaque est concave et s'adapte à la portion sphérique convexe du montant transversal du corps de colonne.

Dans une architecture particulièrement intéressante de l'invention, chaque portion sphérique de la plaque rotule et du montant transversal à 4 trous de passage de l'élément d'assemblage disposés circulairement et équidistants. Les trous de passage de la portion sphérique du montant transversal ont un diamètre plus grand que le diamètre des trous de passage correspondants de la portion sphérique de la plaque rotule qui sont ajustés avec le diamètre de l'élément d'assemblage correspondant constitué par un rivet.

Selon un premier mode de réalisation de l'invention, les moyens de liaison entre la plaque rotule et la face d'appui de la direction assistée électrique sont constitués par une entretoise de translation avec les moyens d'assemblage correspondants, pour avoir le double réglage en translation par rapport aux axes Oy et Oz dudit dispositif d'assemblage. L'entretoise de translation est disposée entre la plaque rotule et la direction assistée électrique.

Dans ce mode de réalisation de l'invention :
- l'entretoise de translation comporte deux séries de trous de passage disposés de part et d'autre du plan des axes Ox et Oy,
- chaque série de trous de passage comporte
   . un trou de centrage disposé et ajusté suivant les axes Oy, Oz avec un pion de centrage correspondant disposé sur la face d'appui de l'ensemble de direction assistée électrique ;
   . au moins un trou de passage de l'élément d'assemblage de l'entretoise de translation avec la plaque rotule, munie d'un trou de passage correspondant,
   . au moins un trou de passage correspondant avec la plaque rotule à au moins un trou de passage de l'élément d'assemblage de la plaque rotule avec ladite face d'appui de l'ensemble de direction assistée électrique munie d'un trou de fixation correspondant ;
- les différents trous de passage de la plaque rotule ou de l'entretoise de translation ayant un diamètre plus grand que le diamètre des trous de passage correspondants de l'entretoise de translation ou de la plaque rotule qui sont ajustés avec le diamètre de l'élément d'assemblage correspondant ;
- cette différence de diamètre étant prévue pour permettre de disposer et fixer correctement l'entretoise de translation sur la plaque rotule par double réglage en translation par rapport aux axes Oy et Oz.

Dans cette même architecture de l'invention, chaque série de trou de passage de l'entretoise de translation comporte :
- deux trous de passage des deux éléments d'assemblage de l'entretoise de translation avec la plaque rotule munie de deux trous de passage correspondants ;
- deux trous de passage correspondant avec la plaque rotule à deux trous de passage des deux éléments d'assemblage de la plaque rotule avec la face d'appui de l'ensemble de direction assistée munie de deux trous de fixation correspondants ;
- les trous de passages de la plaque rotule ont un diamètre plus grand que le diamètre des trous de passage correspondants de l'entretoise de translation qui sont ajustés avec le diamètre de l'élément d'assemblage correspondant constitué par un rivet, et qui sont ajustés avec le diamètre de l'élément de fixation correspondant constitué par une vis.

Indifféremment selon l'invention, l'entretoise de translation est en un élément ou en deux éléments, qui sont disposés de part et d'autre du plan des axes Ox, Oy, chaque élément comportant une série de trous de passage.

Selon un deuxième mode de réalisation de l'invention, les moyens de liaison entre la plaque rotule et la face d'appui de la direction assistée électrique sont constitués par des moyens d'assemblage, qui sont agencés entre ladite plaque rotule et ladite face d'appui de la direction assistée, pour avoir le double réglage en translation par rapport aux axes Oy et Oz dudit dispositif d'assemblage.

Dans ce mode de réalisation de l'invention, la plaque rotule comporte au moins un trou de passage, les trous de passage étant disposés de part et d'autre du plan des axes Ox et Oy,
- chacun des trous de passage recevant un élément d'assemblage de la plaque rotule avec ladite face d'appui de l'ensemble de direction assistée électrique munie d'un trou de fixation correspondant,
- les différents trous de passage de la plaque rotule ayant un diamètre plus grand que le diamètre de l'élément d'assemblage correspondant,
- cette différence de diamètre étant prévue pour permettre de disposer et fixer correctement la plaque rotule sur l'ensemble de direction assistée électrique pour avoir le double réglage en translation par rapport aux axes Oy et Oz.

Dans cette même architecture de l'invention, la plaque rotule comporte deux trous de passage d'un côté du plan et deux trous de passage de l'autre côté du plan des axes Ox et Oy,
- chacun des trous de passage recevant un élément d'assemblage de la plaque rotule avec la face d'appui de l'ensemble de direction assistée munie des quatre trous de fixation correspondants,
- les trous de passage de la plaque rotule ayant un diamètre plus grand que le diamètre de l'élément de fixation correspondant constitué par une vis.

Le dispositif d'assemblage d'un ensemble de direction assistée électrique avec un ensemble de corps de colonne selon l'invention, présente ainsi l'avantage de garantir un alignement parfait des deux ensembles l'un par rapport à l'autre suivant l'axe de direction. Le dispositif de l'invention offre aussi l'avantage de faire appel à un nombre réduit de pièces qui ont un faible encombrement axial et un faible coût.

De plus, le dispositif d'assemblage de l'invention peut s'adapter facilement aux colonnes de direction existantes, tout en donnant un alignement parfait entre l'ensemble de direction assistée électrique et l'ensemble de corps de colonne, ce qui évite tout effort parasite sur la colonne de direction.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est une vue schématique d'une direction de véhicule automobile dans laquelle la direction assistée électrique est montée sur la partie haute de colonne ;
- la figure 2 est une vue en perspective du dispositif d'assemblage d'un ensemble de direction assistée électrique avec un ensemble de corps de colonne selon l'invention ;
- la figure 3 est une vue éclatée en perspective du dispositif d'assemblage représenté sur la figure 2, l'ensemble du corps de colonne n'étant représenté que par le corps de colonne, et l'ensemble de la direction assistée électrique n'étant représenté que par sa face d'appui avec un volume schématique parrallèlépipédique ;
- la figure 4 est une vue en perspective de l'assemblage correspondant à la figure 3 ;
- la figure 5 est une coupe suivant le plan vertical de l'axe de direction ;
- la figure 6 est une vue suivant VI de la figure 5 ;
- la figure 7 est une vue suivant VII de la figure 4 du corps de colonne, de la plaque rotule et des deux éléments de l'entretoise de translation sans les éléments d'assemblage ;
- la figure 8 est une vue suivant VIII de la figure 4 du corps de colonne, de la plaque rotule et des deux éléments de l'entretoise de translation avec les éléments d'assemblage ; et
- la figure 9 est une figure analogue à la figure 3 d'un autre mode de réalisation de l'invention.

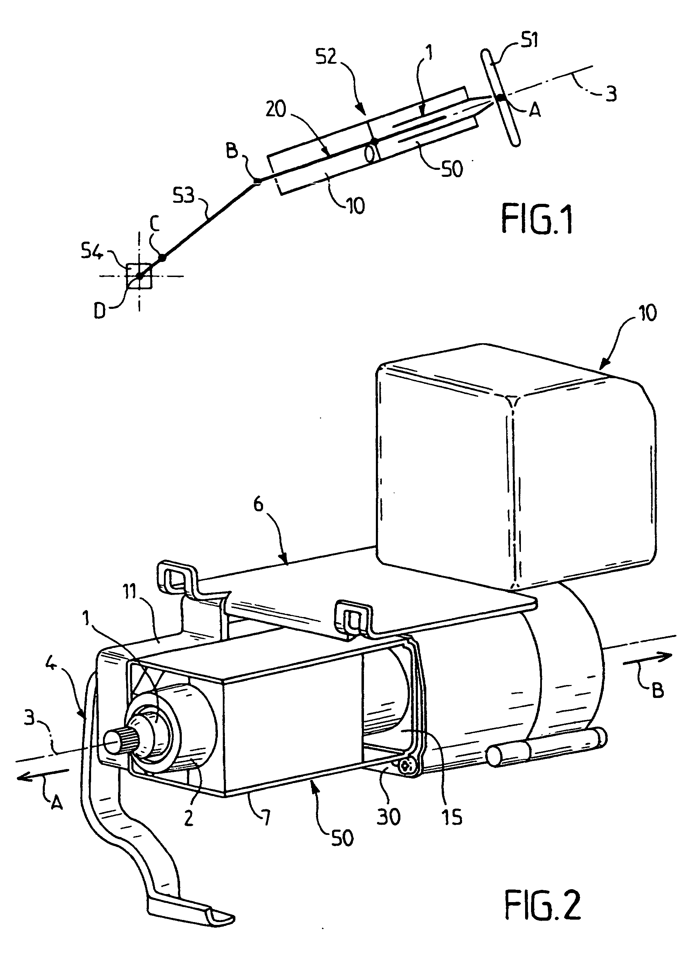

L'invention se rapporte à un dispositif d'assemblage qui est agencé sur une direction de véhicule automobile, comme celle qui est représenté schématiquement sur la figure 1.

La direction représentée comporte une colonne de direction avec une partie haute de colonne 52 appelée aussi haut de colonne schématisée par l'axe AB, et une partie intermédiaire de colonne 53 appelée aussi axe intermédiaire schématisée par l'axe BC.

La partie haute de colonne 52 est reliée au point A du volant de direction 51, et au point B à la partie intermédiaire de colonne 53.

La partie intermédiaire de colonne 53 est reliée au point C à l'entrée de mouvement du boîtier de direction 54 d'axe D.

Le dispositif d'assemblage d'un ensemble de direction assistée électrique 10 et d'un ensemble de corps de colonne 50 est agencé sur la partie haute de colonne 52. Un arbre 20 de la direction assistée électrique 10 est monté dans un arbre femelle de l'ensemble de corps de colonne 50. Cet arbre femelle est l'arbre de direction 1. Les deux ensembles 10 et 50 sont réunis selon un plan d'assemblage transversal et perpendiculaire en un point O à un axe de direction 3 ou axe AB.

Comme on peut le voir sur la figure 2, l'ensemble de corps de colonne 50 comprend l'arbre de direction 1, qui est monté tournant autour de l'axe de direction 3. L'arbre de direction 1 est monté tournant dans un tube-corps 2. Ledit tube-corps 2 est relié à un ensemble support 6, qui est fixé à la structure du véhicule.

L'ensemble support 6 comporte deux éléments latéraux supérieurs non représentés, qui sont disposés de part et d'autre d'un plan vertical 8 passant par l'axe de direction 3. Les éléments latéraux supérieurs sont fixés à la structure du véhicule, et ils sont solidaires d'un élément de raccordement inférieur sensiblement perpendiculaire au plan vertical 8.

L'élément de raccordement porte un montant latéral 11, qui est disposé d'un seul côté par rapport au plan vertical 8 et qui est sensiblement vertical, c'est-à-dire qu'il est sensiblement parallèles audit plan vertical 8 passant par l'axe de direction 3.

La colonne de direction est réglable en inclinaison ou en profondeur, ou en inclinaison et en profondeur.

Le tube-corps 2 est relié à l'ensemble support 6 par un système de réglage en position en hauteur ou en profondeur ou en hauteur et en profondeur.

La colonne de direction comporte un système de serrage 4, qui permet d'avoir la position verrouillée et la position déverrouillée de ladite colonne de direction.

Le système de serrage 4 est disposé et agit suivant un axe de serrage qui est sensiblement perpendiculaire au plan vertical 8 passant par l'axe de direction.

L'ensemble de corps de colonne 50 comporte un corps de colonne 7, qui est relié au montant latéral 11 par le système de serrage 4. Le tube-corps 2 et un élément d'appui sont logés dans le corps de colonne 7.

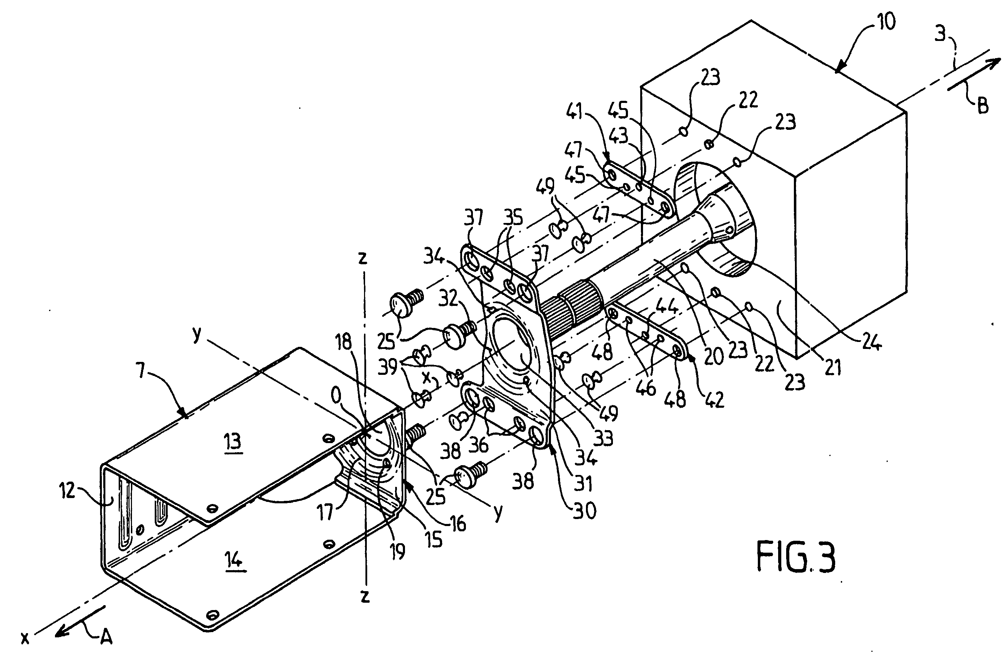

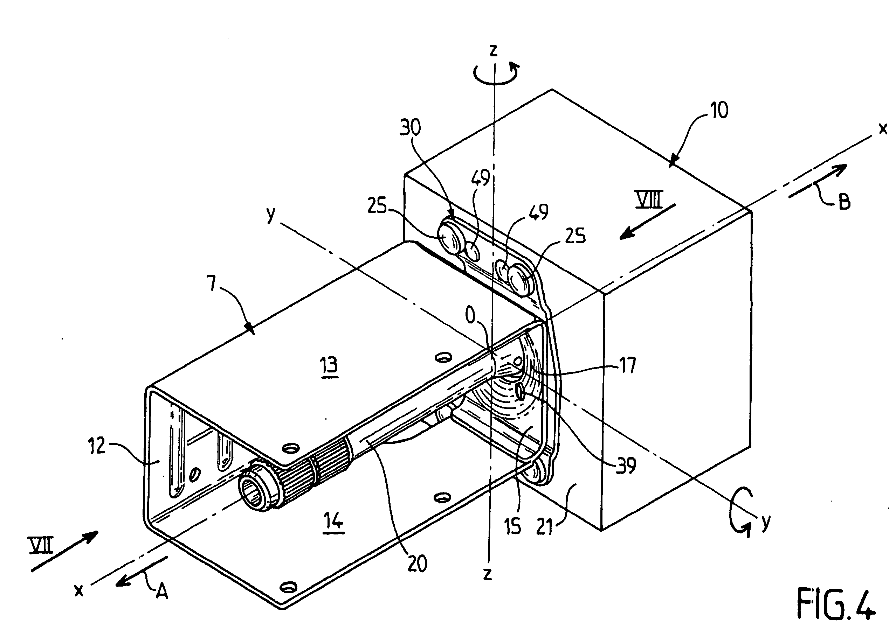

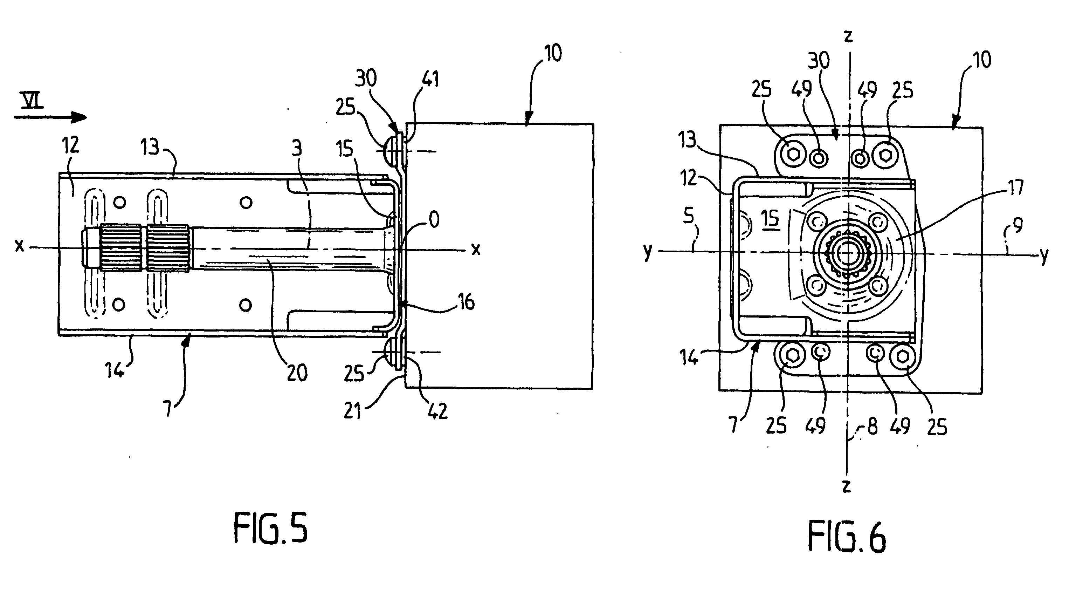

Comme cela est représenté sur les figures 3, 4, 5, 6, et 9, le corps de colonne 7, appelé aussi corps en U, est constitué par un montant longitudinal 12, qui se prolonge par une aile supérieure 13 et une aile inférieure 14, de manière à avoir une section en U qui entoure le tube-corps 2 avec son élément d'appui. La section en U est fermée par un élément support du tube-corps 2. Cet élément support est fixé à l'extrémité de chacune des ailes supérieure 13 et inférieure 14 par des éléments de fixation,, comme cela est représenté sur la figure 2. Le montant longitudinal 12 vient s'appliquer contre le montant latéral 11 de l'ensemble support 6.

Le corps de colonne 7 est fermé, du côté du plan d'assemblage coupant l'axe de direction 3 en O., par un montant transversal 15. Le montant transversal 15 relie l'extrémité longitudinale du montant longitudinal 12 et des ailes supérieure 13 et inférieure 14. Le montant transversal 15 possède une face d'assemblage transversale 16 qui est sensiblement perpendiculaire à l'axe de direction 3. Cette face d'assemblage 16 fait face à une face d'appui 21 de l'ensemble de direction assistée électrique 10. Cette face d'appui 21 est sensiblement perpendiculaire à l'axe de direction 3.

Le réglage de l'assemblage s'effectue suivant trois axes perpendiculaires Ox, Oy, Oz. L'axe Ox est l'axe de direction 3 coupant la face d'assemblage transversale 16 du corps de colonne en 0, l'axe Oz est dans le plan vertical 8 de l'axe de direction 3, et l'axe Oy est dans un plan 9 perpendiculaire au plan vertical 8.

Le dispositif d'assemblage selon l'invention comporte :
- une plaque rotule 30 qui est agencée de manière à ce qu'elle permette un double réglage en rotation par rapport aux axes Oy et Oz de l'assemblage entre l'ensemble de corps de colonne 50 et ladite plaque rotule 30, et cet assemblage avec l'ensemble de direction assistée électrique 1 ;
- des moyens de liaison qui sont agencés entre la plaque rotule 30 et la face d'appui 21 de la direction assistée électrique 10 de manière à permettre un double réglage en translation par rapport aux axes Oy et Oz dudit assemblage ;
- la plaque rotule 30 est disposée entre la direction assistée électrique 10 et le corps de colonne 7 ;
- des moyens d'assemblage sont agencés entre le montant transversal 15 du corps de colonne 7 et la plaque rotule 30,
- des moyens d'assemblage, appartenant aux moyens de liaison, étant agencés entre la plaque rotule 30 et la face d'appui 21 de la direction assistée électrique 10 ;
- de manière à ce que l'axe de la direction assistée électrique 10 et l'axe du corps de colonne 50 soit parfaitement alignés l'un par rapport à l'autre suivant l'axe de direction 3.

Dans un premier mode de réalisation de l'invention représenté sur les figures 3 à 8, les moyens de liaison entre la plaque rotule 30 et la face d'appui 21 de la direction assistée électrique 10 sont constitués par une entretoise en un élément 40 ou en deux éléments 41 et 42, avec les moyens d'assemblage correspondant.

La plaque rotule 30 et l'entretoise de translation en deux éléments 41 et 42 sont disposés entre l'ensemble de direction assistée électrique 10 et le corps de colonne 7. Plus précisément, la plaque rotule 30 est disposée face à la face d'assemblage 16 du montant transversal 15, et les éléments 41 et 42 de l'entretoise de translation sont disposés face à la face d'appui 21 de l'ensemble de direction assistée 10.

La plaque rotule 30 est agencée de manière à ce qu'elle permette un double réglage en rotation par rapport aux axes Oy et Oz de l'assemblage entre l'ensemble de corps de colonne 50 et l'ensemble de direction assistée électrique 10.

L'entretoise de translation en deux éléments 41 et 42 est agencée de manière à ce qu'elle permette un double réglage en translation par rapport aux axes Oy et Oz dudit assemblage.

Des moyens d'assemblage sont agencés entre le montant transversal 15 du corps de colonne 7, la plaque rotule 30, l'entretoise de translation en deux éléments 40 et 41 et la face d'appui 21 de la direction assistée électrique 10 ; de manière à ce que l'axe de la direction assistée électrique 10 et l'axe du corps de colonne 7 soient parfaitement alignés l'un par rapport à l'autre suivant l'axe de direction 3.

La plaque rotule 30 comporte une face 31 avec une portion en forme de couronne sphérique 32 d'axe Ox qui entoure un trou de passage 33 de l'arbre de direction 1.

La face d'assemblage 16 du montant transversal 15 comporte une portion en forme de couronne sphérique 17 d'axe Ox qui entoure un trou de passage 18 de l'arbre de direction 1.

La portion sphérique 32 et la portion sphérique 17 sont agencées de manière à former une portée sphérique l'une par rapport à l'autre. La portion sphérique 17 a au moins deux trous de passage 19 d'un élément d'assemblage 39. La portion sphérique 32 a au moins deux trous de passage 34 de l'élément d'assemblage 39 correspondant.

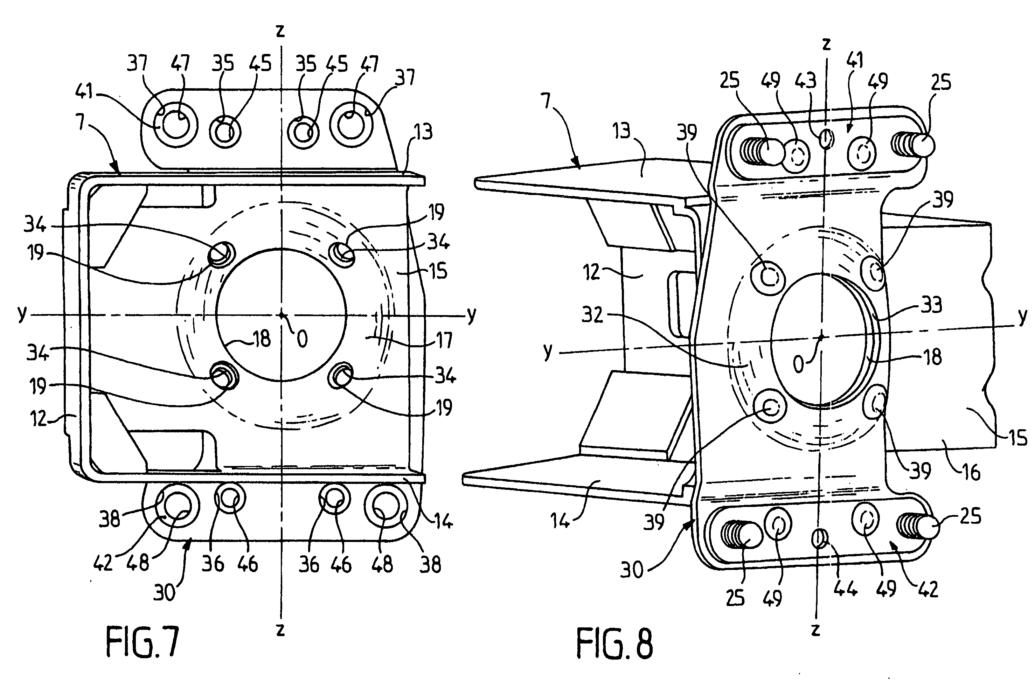

Selon le mode de réalisation représenté sur les figures 7 et 8, les trous de passage 19 de la portion sphérique 17 ont un diamètre plus grand que le diamètre des trous de passage 34 correspondants de l'autre portion sphérique 32.

Dans un autre mode de réalisation, les trous de passage 34 ont un diamètre plus grand que le diamètre des trous de passage 19 correspondants.

Dans les deux modes de réalisation, la différence de diamètre est étudiée et prévue pour permettre de disposer et fixer correctement la plaque rotule 30 sur le corps de colonne 7 par double réglage en rotation par rapport aux axes Oy et Oz.

Dans le mode de réalisation représenté sur les figures 7 et 8, la portion sphérique 17 a 4 trous de passage 19, et la portion sphérique 32 a 4 trous de passage 34. Les trous de passage sont disposés circulairement et équidistants.

Les trous de passage 19 de la portion sphérique 17 du montant transversal 15 ont un diamètre plus grand que le diamètre des trous de passage 34 correspondants de la portion sphérique 32 de la plaque rotule 30 qui sont ajustés avec le diamètre de l'élément d'assemblage correspondant constitué par un rivet 39. De plus, la portion sphérique 32 de la plaque rotule 30 est concave et s'adapte à la portion sphérique 17 convexe du montant transversal 15 du corps de colonne 16.

L'entretoise de translation est en deux éléments 41 et 42. Dans un autre mode de réalisation, l'entretoise de translation est en un seul et même élément 40. L'entretoise de translation comporte deux séries de trous de passage qui sont disposés de part et d'autre du plan 9 des axes Ox et Oy.

Chaque série de trous de passage est aménagée sur l'élément d'entretoise de translation 41 ou 42 correspondant, qui sont disposés de part et d'autre du plan 9 des axes Ox et Oy.

Les trous de passage ayant la même fonction peuvent être alignés suivant une ligne parallèle au plan 9, comme dans le cas des figures, ou ils peuvent être disposés de façon quelconque.

L'élément d'entretoise de translation 41 comporte :
. un trou de centrage 43 disposé et ajusté suivant les axes Oy, Oz avec un pion de centrage correspondant 22 disposé sur la face d'appui 21 de l'ensemble de direction assistée électrique 10 ;
. au moins un trou de passage 45 de l'élément d'assemblage 49 de l'élément d'entretoise de translation 41 avec la plaque rotule 30, munie d'un trou de passage correspondant 35,
. au moins un trou de passage 47 correspondent avec la plaque rotule 30 à au moins un trou de passage 37 de l'élément d'assemblage 25 de la plaque rotule 30 avec ladite face d'appui 21 de l'ensemble de direction assistée électrique 10 munie d'un trou de fixation correspondant 23.

Les trous de passage 35 et 37 de la plaque rotule 30 ont un diamètre plus grand que le diamètre des trous de passage correspondants 45 et 47 de l'élément d'entretoise de translation 41, qui sont ajustés avec le diamètre de l'élément d'assemblage correspondant, comme cela est représenté sur les figures. Dans une autre réalisation, les trous de passage 45 et 47 ont un diamètre plus grand que le diamètre des trous de passage 35 et 37.

Cette différence de diamètre est prévue pour permettre de disposer et fixer correctement l'élément d'entretoise de translation 41 sur la plaque rotule 30 et la plaque rotule 30 sur l'ensemble de direction assistée électrique 10 par double réglage en translation par rapport aux axes OY et Oz.

L'élément d'entretoise de translation 42 comporte
. un trou de centrage 44 disposé et ajusté suivant les axes Oy, Oz avec un pion de centrage correspondant 22 disposé sur la face d'appui 21 de l'ensemble de direction assistée électrique 10 ;
. au moins un trou de passage 46 de l'élément d'assemblage 49 de l'élément de l'entretoise de translation 42 avec la plaque rotule 30, munie d'un trou de passage correspondant 36,
. au moins un trou de passage 48 correspondant avec la plaque rotule 30 à au moins un trou de passage 38 de l'élément d'assemblage 25 de la plaque rotule 30 avec ladite face d'appui 21 de l'ensemble de direction assistée électrique 10 munie d'un trou de fixation correspondant 23.

Les trous de passage 36 et 38 de la plaque rotule 30 ont un diamètre plus grand que le diamètre des trous de passage correspondants 46 et 48 de l'élément d'entretoise de translation 42, qui sont ajustés avec le diamètre de l'élément d'assemblage correspondant, comme cela est représenté sur les figures. Dans une autre réalisation, les trous de passage 46 et 48 ont un diamètre plus grand que le diamètre des trous de passage 36 et 38.

Cette différence de diamètre est prévue pour permettre de disposer et fixer correctement l'élément d'entretoise de translation 42 sur la plaque rotule 30 et la plaque rotule 30 sur l'ensemble de direction assistée électrique 10 par double réglage en translation par rapport aux axes OY et Oz.

Dans la réalisation représentée sur les figures, l'élément d'entretoise de translation 41 comporte :
- deux trous de passage 45 des deux éléments d'assemblage 49 de l'élément d'entretoise de translation 41 avec la plaque rotule 30 munie de deux trous de passage correspondants 35 ;
- deux trous de passage 47 correspondant avec la plaque rotule 30 à deux trous de passage 37 des deux éléments d'assemblage 25 de la plaque rotule 30 avec la face d'appui 21 de l'ensemble de direction assistée 10 munie de deux trous de fixation correspondants ;

Les trous de passages 35 et 37 de la plaque rotule 30 ont un diamètre plus grand que le diamètre des trous de passage correspondants 45 et 47 de l'élément de l'entretoise de translation 41 qui sont ajustés avec le diamètre de l'élément d'assemblage correspondant constitué par un rivet 49, et qui sont ajustés avec le diamètre de l'élément de fixation correspondant constitué par une vis 25.

Dans la réalisation représentée sur les figures, l'élément d'entretoise de translation 42 comporte :
- deux trous de passage 46 des deux éléments d'assemblage 49 de l'élément d'entretoise de translation 42 avec la plaque rotule 30 munie de deux trous de passage correspondants 36 ;
- deux trous de passage 48 correspondant avec la plaque rotule 30 à deux trous de passage 38 des deux éléments d'assemblage 25 de la plaque rotule 30 avec la face d'appui 21 de l'ensemble de direction assistée 10 munie de deux trous de fixation correspondants 23 ;

Les trous de passages 36 et 38 de la plaque rotule 30 ont un diamètre plus grand que le diamètre des trous de passage correspondants 46 et 48 de l'élément d'entretoise de translation 42 qui sont ajustés avec le diamètre de l'élément d'assemblage correspondant constitué par un rivet 49, et qui sont ajustés avec le diamètre de l'élément de fixation correspondant constitué par une vis 25.

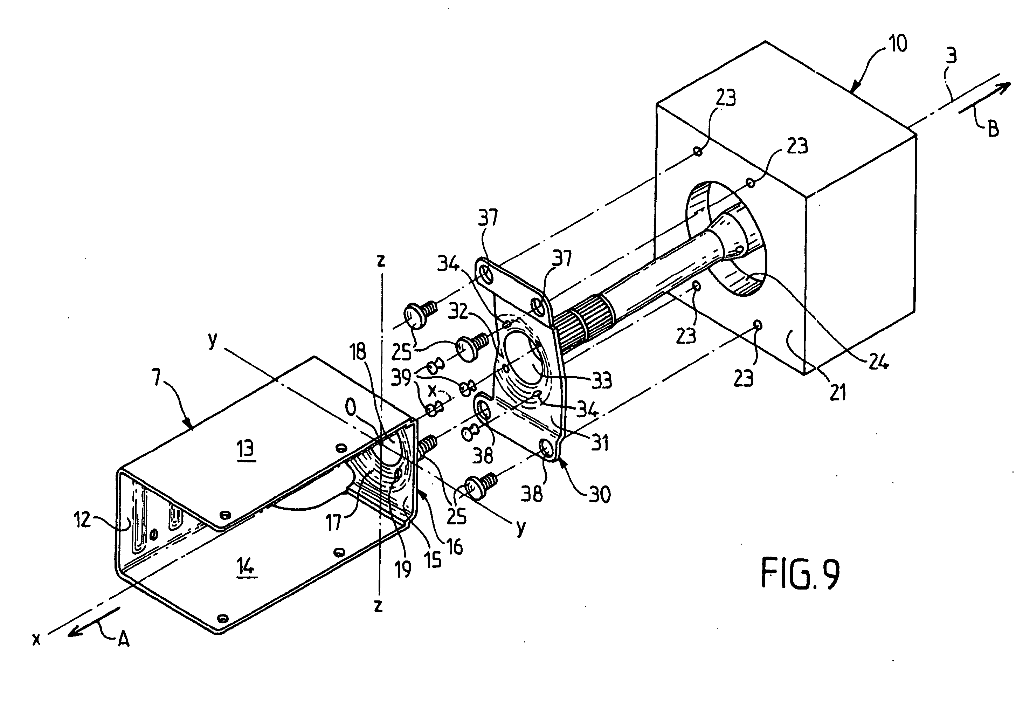

Dans une deuxième réalisation de l'invention représentée sur la figure 9, les moyens de liaison entre la plaque rotule 30 et la face d'appui 21 de la direction assistée électrique 10 sont constitués par les moyens d'assemblage 25 qui sont agencés entre ladite plaque rotule 30 et ladite face d'appui 21 de la direction assistée, pour avoir le double réglage en translation par rapport aux axes Oy et Oz dudit dispositif d'assemblage.

Dans ce mode de réalisation de l'invention, l'assemblage entre l'ensemble de corps de colonne 50 et la plaque rotule 30 est le même que celui du premier mode de réalisation.

La plaque rotule 30 comporte deux trous de passage 37 d'un côté du plan 9, et deux trous de passage 38 de l'autre côté du plan 9.

Chacun des trous de passage 37 et 38 reçoit un élément d'assemblage 25 de la plaque rotule 30 avec la face d'appui 21 de l'ensemble de direction assistée électrique 10, qui est munie des quatre trous de fixation correspondant 23.

Les trous de passage 37 et 38 de la plaque rotule 30 ont un diamètre plus grand que la diamètre de l'élément d'assemblage ou de fixation correspondant qui est constitué par une vis 25.

Cette différence de diamètre est prévue pour permettre de disposer et de fixer correctement la plaque rotule 30 sur l'ensemble de direction assistée électrique 10 pour effectuer le double réglage en translation par rapport aux axes Oy et Oz.

Ce deuxième mode de réalisation est particulièrement intéressant pour l'industrie automobile, car il permet de réaliser au moindre coût l'assemblage d'un ensemble de direction assistée électrique 10 avec un ensemble de corps de colonne 50 de direction de véhicule automobile.

## Revendications

1. Dispositif d'assemblage d'un ensemble de direction assistée (10) électrique avec un ensemble de corps de colonne (50) de direction de véhicule automobile, l'ensemble de corps de colonne (50) comportant un tube-corps (2) dans lequel est monté un arbre de direction (1) tournant suivant un axe de direction (3), le corps de colonne étant monté sur un ensemble support (6) solidaire de la structure du véhicule, **caractérisé en ce que** :
- le corps de colonne (7) comporte un montant transversal (15) avec une face d'assemblage transversale (16), sensiblement perpendiculaire à l'axe de direction (3) ;
- l'ensemble de direction assistée électrique (10) comporte une face d'appui (21) sensiblement perpendiculaire à l'axe de direction (3) ;
- le réglage de l'assemblage s'effectuant suivant trois axes perpendiculaires Ox, Oy, Oz, l'axe Ox étant l'axe de direction (3) coupant la face d'assemblage transversale (16) du corps de colonne en 0, l'axe Oz étant dans le plan vertical (8) de l'axe de direction (3), et l'axe Oy étant dans un plan (9) perpendiculaire au plan vertical ;
- une plaque rotule (30) est agencée de manière à ce qu'elle permette un double réglage en rotation par rapport aux axes Oy et Oz de l'assemblage entre l'ensemble de corps de colonne (50) et ladite plaque rotule (30), et cet assemblage avec l'ensemble de direction assistée électrique (10) ;
- des moyens de liaison sont agencés entre la plaque rotule (30) et la face d'appui (21) de la direction assistée électrique (10) de manière à permettre un double réglage en translation par rapport aux axes Oy et Oz dudit assemblage ;
- la plaque rotule (30) étant disposée entre la direction assistée électrique (10) et le corps de colonne (7) ;
- des moyens d'assemblage (39) étant agencés entre le montant transversal (15) du corps de colonne (7) et la plaque rotule (30),
- des moyens d'assemblage (25, 49), appartenant aux moyens de liaison, étant agencés entre la plaque rotule (30) et la face d'appui (21) de la direction assistée électrique (10) ;
- de manière à ce que l'axe de la direction assistée électrique (10) et l'axe du corps de colonne (50) soit parfaitement alignés l'un par rapport à l'autre suivant l'axe de direction (3).

2. Dispositif d'assemblage selon la revendication 1, **caractérisé en ce que** les moyens de liaison entre la plaque rotule (30) et la face d'appui (21) de la direction assistée électrique (10) sont constitués par les moyens d'assemblage (25) qui sont agencés entre ladite plaque rotule (30) et ladite face d'appui (21) de la direction assistée, pour avoir le double réglage en translation par rapport aux axes Oy et Oz dudit dispositif d'assemblage.

3. Dispositif d'assemblage selon la revendication 1, **caractérisé en ce que** les moyens de liaison entre la plaque rotule (30) et la face d'appui (21) de la direction assistée électrique (10) sont constitués par :
- une entretoise de translation (40, 41, 42) avec les moyens d'assemblage (25, 49) pour avoir le double réglage en translation par rapport aux axes Oy et Oz dudit dispositif d'assemblage ;
- l'entretoise de translation (40, 41, 42) étant disposée entre la plaque rotule (30) et la direction assistée électrique (10).

4. Dispositif d'assemblage selon la revendication 2 ou 3, **caractérisé en ce que** :
- la plaque rotule (30) comporte une face (31) avec une portion en forme de couronne sphérique (32) d'axe Ox qui entoure un trou de passage (33) de l'arbre de direction (1) ;
- la face d'assemblage (16) du montant transversal 15 comporte une portion en forme de couronne sphérique (17) d'axe Ox qui entoure un trou de passage (18) de l'arbre de direction (1) ;
- chacune des portions sphériques (32, 17) étant agencée de manière à former une portée sphérique l'une par rapport à l'autre ;
- chaque portion sphérique (32, 17) ayant au moins deux trous de passage (34, 19) de l'élément d'assemblage (39) entre le montant transversal (15) et la plaque rotule (30) ;
- les trous de passage (19, 34) de l'une (17) des deux portions sphériques (17, 32) ayant un diamètre plus grand que le diamètre des trous de passage correspondants (34, 19) de l'autre portion sphérique (32, 17) qui sont ajustés avec le diamètre de l'élément d'assemblage correspondant (39) ;
- cette différence de diamètre étant prévue pour permettre de disposer et fixer correctement la plaque rotule (30) sur le corps de colonne (7) par double réglage en rotation par rapport aux axes Oy et Oz.

5. Dispositif d'assemblage selon la revendication 2, **caractérisé en ce que** :
- la plaque rotule (30) comporte au moins un trou de passage (37, 38), les trous de passage étant disposés de part et d'autre du plan (9) des axes Ox et Oy,
- chacun des trous de passage (37, 38) recevant un élément d'assemblage (25) de la plaque rotule (30) avec ladite face d'appui (21) de l'ensemble de direction assistée électrique (10) munie d'un trou de fixation correspondant (23),
- les différents trous de passage (37, 38) de la plaque rotule (30) ayant un diamètre plus grand que le diamètre de l'élément d'assemblage correspondant (25),
- cette différence de diamètre étant prévue pour permettre de disposer et fixer correctement la plaque rotule (30) sur l'ensemble de direction assistée électrique (10) pour avoir le double réglage en translation par rapport aux axes Oy et Oz.

6. Dispositif d'assemblage selon la revendication 3, **caractérisé en ce que** :
- l'entretoise de translation (40, 41, 42) comporte deux séries de trous de passage disposés de part et d'autre du plan (9) des axes Ox et Oy,
- chaque série de trous de passage comporte
. un trou de centrage (43, 44) disposé et ajusté suivant les axes Oy, Oz avec un pion de centrage correspondant (22) disposé sur la face d'appui (21) de l'ensemble de direction assistée électrique (10) ;
. au moins un trou de passage (45, 46) de l'élément d'assemblage (49) de l'entretoise de translation (40, 41, 42) avec la plaque rotule (30), munie d'un trou de passage correspondant (35, 36),
. au moins un trou de passage (47, 48) correspondent avec la plaque rotule (30) à au moins un trou de passage (37, 38) de l'élément d'assemblage (25) de la plaque rotule (30) avec ladite face d'appui (21) de l'ensemble de direction assistée électrique (10) munie d'un trou de fixation correspondant (23) ;
- les différents trous de passage (35, 36, 37, 38 - 45, 46, 47, 48) de la plaque rotule (30) ou de l'entretoise de translation (40, 41, 42) ayant un diamètre plus grand que le diamètre des trous de passage correspondants (45, 46, 47, 48 - 35, 36, 37, 38) de l'entretoise de translation (40, 41, 42) ou de la plaque rotule (30) qui sont ajustés avec le diamètre de l'élément d'assemblage correspondant (25, 49) ;
- cette différence de diamètre étant prévue pour permettre de disposer et fixer correctement l'entretoise de translation (40, 41, 42) sur la plaque rotule (30) et la plaque rotule (30) sur l'ensemble de direction assistée électrique (10) par double réglage en translation par rapport aux axes OY et Oz.

7. Dispositif d'assemblage selon la revendication 4, **caractérisé en ce que** la portion sphérique (32) de la plaque rotule (30) est concave et s'adapte à la portion sphérique (17) convexe du montant transversal (15) du corps de colonne (16).

8. Dispositif d'assemblage selon la revendication 4 ou 7, **caractérisé en ce que** :
- chaque portion sphérique (17, 32) a 4 trous de passage (19, 34) de l'élément d'assemblage 39 disposés circulairement et équidistants,
- les trous de passage (19) de la portion sphérique (17) du montant transversal (15) ont un diamètre plus grand que le diamètre des trous de passage (34) correspondants de la portion sphérique (32) de la plaque rotule (30) qui sont ajustés avec le diamètre de l'élément d'assemblage correspondant constitué par un rivet (39).

9. Dispositif d'assemblage selon la revendication 5, **caractérisé en ce que** :
- la plaque rotule (30) comporte deux trous de passage (37) d'un côté du plan (9) et deux trous de passage (38) de l'autre côté du plan (9),
- chacun des trous de passage (37, 38) recevant un élément d'assemblage (25) de la plaque rotule (30) avec la face d'appui (21) de l'ensemble de direction assistée (10) munie des quatre trous de fixation correspondants 23,
- les trous de passage (37, 38) de la plaque rotule (30) ayant un diamètre plus grand que le diamètre de l'élément de fixation correspondant constitué par une vis (25).

10. Dispositif d'assemblage selon la revendication 6, **caractérisé en ce que en ce que** chaque série de trous de passage de l'entretoise de translation (40, 41, 42) comporte :
- deux trous de passage (45, 46) des deux éléments d'assemblage (49) de l'entretoise de translation (40, 41, 42) avec la plaque rotule (30) munie de deux trous de passage correspondants (35, 36) ;
- deux trous de passage (47, 48) correspondant avec la plaque rotule (30) à deux trous de passage (37, 38) des deux éléments d'assemblage (25) de la plaque rotule (30) avec la face d'appui (21) de l'ensemble de direction assistée (10) munie de deux trous de fixation correspondants (23) ;
- les trous de passages (35, 36, 37, 38) de la plaque rotule (30) ont un diamètre plus grand que le diamètre des trous de passage correspondants (45, 46, 47, 48) de l'entretoise de translation (40, 41, 42) qui sont ajustés avec le diamètre de l'élément d'assemblage correspondant constitué par un rivet (49), et qui sont ajustés avec le diamètre de l'élément de fixation correspondant constitué par une vis (25).

11. Dispositif d'assemblage selon la revendication 6 ou 10, **caractérisé en ce que** l'entretroise de translation est en un élément (40).

12. Dispositif d'assemblage selon la revendication 6 ou 10, **caractérisé en ce que** l'entretoise de translation est en deux éléments (41, 42) disposés de part et d'autre du plan (9) des axes Ox, Oy, chaque élément (41, 42) comportant une série de trous de passage.

## Patentansprüche

1. Vorrichtung zur Verbindung einer elektrischen Servolenkungseinheit (10) mit einer Kraftfahrzeug-Lenksäulenkörpereinheit (50), wobei die Lenksäulenkörpereinheit (50) einen Rohrkörper (2) aufweist, in dem eine Lenkwelle (1) montiert ist, die sich um eine Lenkungsachse (3) dreht, wobei der Lenksäulenkörper auf einer Trageinheit (6) montiert ist, die mit der Fahrzeugkonstruktion fest verbunden ist, **dadurch gekennzeichnet, dass**:
- der Lenksäulenkörper (7) einen Querträger (15) mit einer quer verlaufenden Verbindungsseite (16) aufweist, die auf der Lenkungsachse (3) im Wesentlichen senkrecht steht,
- die elektrische Servolenkungseinheit (10) eine Anlagefläche (21) aufweist, die auf der Lenkungsachse (3) im Wesentlichen senkrecht steht,
- wobei die Einstellung der Anordnung längs dreier senkrecht zueinander stehender Achsen Ox, Oy, Oz erfolgt, wobei die Achse Ox die Lenkungsachse (3) ist, die die quer verlaufende Verbindungsseite (16) des Lenksäulenkörpers in 0 schneidet, während Oz in der Vertikalebene (8) der Lenkungsachse (3) liegt und die Achse Oy in einer Ebene (9), die auf der vertikalen Ebene senkrecht steht,
- eine Kugelgelenkplatte (30) derart angeordnet ist, dass sie eine zweifache Dreheinstellung relativ zu den Achsen Oy und Oz der Anordnung zwischen der Lenksäulenkörpereinheit (50) und der genannten Kugelgelenkplatte (30) und dieser Anordnung zur elektrischen Servolenkungseinheit (10) erlaubt,
- Befestigungsmittel der Kugelgelenkplatte (30) an der Anlagefläche (21) der elektrischen Servolenkung (10) derart angeordnet sind, dass sie eine zweifache Verschiebungseinstellung relativ zu den Achsen Oy und Oz der genannten Anordnung erlauben,
- wobei die Kugelgelenkplatte (30) zwischen der elektrischen Servolenkung (10) und dem Lenksäulenkörper (7) angeordnet ist,
- wobei Verbindungsmittel (39) zwischen dem Querträger (15) des Lenksäulenkörpers (7) und der Kugelgelenkplatte (30) angeordnet sind,
- wobei Verbindungsmittel (25, 49), die zu den Befestigungsmitteln gehören, zwischen der Kugelgelenkplatte (30) und der Anlagefläche (21) der elektrischen Servolenkung (10) angeordnet sind,
- derart, dass die Achse der elektrischen Servolenkung (10) und die Achse des Lenksäulenkörpers (50) längs der Lenkungsachse (3) vollkommen miteinander ausgerichtet sind.

2. Verbindungsvorrichtung nach Patentanspruch 1, **dadurch gekennzeichnet, dass** die Befestigungsmittel der Kugelgelenkplatte (30) an der Anlagefläche (21) der elektrischen Servolenkung (10) aus den Verbindungsmitteln (25) bestehen, die zwischen der genannten Kugelgelenkplatte (30) und der genannten Anlagefläche (21) der Servolenkung so angeordnet sind, dass die zweifache Verschiebungseinstellung relativ zu den Achsen Oy und Oz der genannten Verbindungsvorrichtung erhalten wird.

3. Verbindungsvorrichtung nach Patentanspruch 1, **dadurch gekennzeichnet, dass** die Befestigungsmittel der Kugelgelenkplatte (30) an der Anlagefläche (21) der elektrischen Servolenkung (10) bestehen aus:
- einem Verschiebungsriegel (40, 41, 42) mit den Verbindungsmitteln (25, 49), um die zweifache Verschiebungseinstellung relativ zu den Achsen Oy und Oz der genannten Verbindungsvorrichtung zu erhalten,
- wobei der Verschiebungsriegel (40, 41, 42) zwischen der Kugelgelenkplatte (30) und der elektrischen Servolenkung (10) angeordnet ist.

4. Verbindungsvorrichtung nach Patentanspruch 2 oder 3, **dadurch gekennzeichnet, dass**:
- die Kugelgelenkplatte (30) eine Seite (31) mit einem Bereich in Form eines Kugelringes (32) mit Achse Ox aufweist, der ein Durchtrittsloch (33) für die Lenkwelle (1) umgibt,
- die quer verlaufende Verbindungsseite (16) des Querträgers (15) einen Bereich in Form eines Kugelringes (17) mit Achse Ox aufweist, der ein Durchtrittsloch (18) für die Lenkwelle (1) umgibt,
- wobei jeder der sphärischen Bereiche (32, 17) derart angeordnet ist, dass sie jeweils eine sphärische Anlagefläche für den anderen bilden,
- wobei jeder sphärische Bereich (32, 17) über mindestens zwei Durchtrittslöcher (34, 19) für das Verbindungsmittel (39) zwischen dem Querträger (15) und der Kugelgelenkplatte (30) verfügt,
- wobei die Durchtrittslöcher (19, 34) eines (17) der beiden sphärischen Bereiche (17, 32) einen Durchmesser aufweisen, der größer ist, als der Durchmesser der entsprechenden Durchtrittslöcher (34, 19) des anderen sphärischen Bereiches (32, 17), die dem Durchmesser des entsprechenden Verbindungsteils (39) angepasst sind,
- wobei dieser Unterschied des Durchmessers dafür vorgesehen ist, zu erlauben, die Kugelgelenkplatte (30) durch zweifache Drehungseinstellung relativ zu den Achsen Oy und Oz am Lenksäulenkörper (7) korrekt anzuordnen und zu befestigen.

5. Verbindungsvorrichtung nach Patentanspruch 2, **dadurch gekennzeichnet, dass**:
- die Kugelgelenkplatte (30) mindestens ein Durchtrittsloch (37, 38) aufweist, wobei die Durchtrittslöcher beiderseits der Ebene (9) der Achsen Ox und Oy angeordnet sind,
- wobei jedes der Durchtrittslöcher (37, 38) ein Verbindungsteil (25) zur Verbindung der Kugelgelenkplatte (30) mit der genannten Anlagefläche (21) der elektrischen Servolenkungseinheit (10) aufnimmt, die mit einem entsprechenden Befestigungsloch (23) versehen ist,
- wobei die verschiedenen Durchtrittslöcher (37, 38) der Kugelgelenkplatte (30) einen größeren Durchmesser aufweisen, als das entsprechende Verbindungsteil (25),
- wobei dieser Unterschied der Durchmesser dafür vorgesehen ist, zu erlauben, die Kugetgelenkplatte (30) an der elektrischen Servolenkungseinheit (10) korrekt anzuordnen und zu befestigen, um die zweifache Verschiebungseinstellung relativ zu den Achsen Oy und Oz zu erhalten.

6. Verbindungsvorrichtung nach Patentanspruch 3, **dadurch gekennzeichnet, dass**:
- der Verschiebungsriegel (40, 41, 42) zwei Reihen von Durchtrittslöchern aufweist, die beiderseits der Ebene (9) der Achsen Ox und Oy angeordnet sind.
- wobei jede Reihe von Durchtrittslöchern aufweist:
· ein Zentrierloch (43, 44), das längs den Achsen Oy, Oz angeordnet und mit einem entsprechenden Zentrierstift (22) ausgerichtet ist, der auf der Anlagefläche (21) der elektrischen Servolenkungseinheit (10) angeordnet ist,
· mindestens ein Durchtrittsloch (45, 46) für das Verbindungsteil (49) zur Verbindung des Verschiebungsriegels (40, 41, 42), mit der Kugelgelenkplatte (30), die mit einem entsprechenden Durchtrittsloch (35, 36) versehen ist,
· mindestens ein Durchtrittsloch (47, 48), das der Kugelgelenkplatte (30) in mindestens einem Durchtrittsloch (37, 38) für das Verbindungsteil (25) zur Verbindung der Kugelgelenkplatte (30) mit der genannten Anlagefläche (21) der elektrischen Servolenkungseinheit (10), die mit einem entsprechenden Befestigungsloch (23) versehen ist, entspricht,
- wobei die verschiedenen Durchtrittslöcher (35, 36, 37, 38 - 45, 46, 47, 48) der Kugelgelenkplatte (30) oder des Verschiebungsriegels (40, 41, 42) einen größeren Durchmesser haben, als die entsprechenden Durchtrittslöcher (45, 46, 47, 48 - 35, 36, 37, 38) des Verschiebungsriegels (40, 41, 42) oder der Kugelgelenkplatte (30), die dem Durchmesser des entsprechenden Verbindungsteils (25, 49) angepasst sind,
- wobei dieser Unterschied der Durchmesser vorgesehen ist, um zu erlauben, den Verschiebungsriegel (40, 41, 42) an der Kugelgelenkplatte (30) und die Kugelgelenkplatte (30) an der elektrischen Servolenkungseinheit (10) durch zweifache Verschiebungseinstellung längs den Achsen Oy und Oz korrekt anzuordnen und zu befestigen.

7. Verbindungsvorrichtung nach Patentanspruch 4, **dadurch gekennzeichnet, dass** der sphärische Bereich (32) der Kugelgelenkplatte (30) konkav ist und sich an den konvexen sphärischen Bereich (17) des Querträgers (15) des Lenksäulenkörpers (16) anlegt.

8. Verbindungsvorrichtung nach Patentanspruch 4 oder 7, **dadurch gekennzeichnet, dass**:
- jeder sphärische Bereich (17, 32) über vier Durchtrittslöcher (19, 34) für das Verbindungsteil (39) verfügt, die im Kreis und äquidistant angeordnet sind,
- die Durchtrittslöcher (19) des sphärischen Bereiches (17) des Querträgers (15) einen größeren Durchmesser haben, als die entsprechenden Durchtrittslöcher (34) des sphärischen Bereiches (32) der Kugelgelenkplatte (30), die dem Durchmesser des entsprechenden Verbindungsteils angepasst sind, bei dem es sich um eine Niete (39) handelt.

9. Verbindungsvorrichtung nach Patentanspruch 5, **dadurch gekennzeichnet, dass**:
- die Kugelgelenkplatte (30) zwei Durchtrittslöcher (37) auf einer Seite der Ebene (9) aufweist und zwei Durchtrittslöcher (38) auf der anderen Seite der Ebene (9),
- wobei jedes der Durchtrittslöcher (37, 38) ein Verbindungsteil (25) zur Verbindung der Kugelgelenkplatte (30) mit der Anlagefläche (21) der Servolenkungseinheit (10) aufnimmt, die mit den vier entsprechenden Befestigungslöchern (23) versehen ist,
- wobei die Durchtrittslöcher (37, 38) der Kugelgelenkplatte (30) einen größeren Durchmesser haben, als das entsprechende Befestigungsteil, bei dem es sich um eine Schraube (25) handelt.

10. Verbindungsvorrichtung nach Patentanspruch 6, **dadurch gekennzeichnet, dass** jede Reihe von Durchtrittslöchern des Verschiebungsriegets (40, 41, 42) aufweist:
- zwei Durchtrittslöcher (45, 46) für die beiden Verbindungsteile (49) zur Verbindung des Verschiebungsriegels (40, 41, 42) mit der Kugelgelenkplatte (30), die mit zwei entsprechenden Durchtrittslöchern (35, 36) versehen ist,
- zwei Durchtrittslöcher (47, 48), die der Kugelgelenkplatte (30) in zwei Durchtrittslöchern (37, 38) für die beiden Verbindungsteile (25) zur Verbindung der Kugelgelenkplatte (30) mit der Anlagefläche (21) der Servolenkungseinheit (10) entsprechen, die mit zwei entsprechenden Befestigungslöchern (23) versehen ist,
- wobei die Durchtrittslöcher (35, 36, 37, 38) der Kugelgelenkplatte (30) einen größeren Durchmesser haben, als die entsprechenden Durchtrittslöcher (45, 46, 47, 48) des Verschiebungsriegels (40, 41, 42), die dem Durchmesser des entsprechenden Verbindungsteils angepasst sind, bei dem es sich um eine Niete (49) handelt, und die dem Durchmesser des entsprechenden Verbindungsteils angepasst sind, bei dem es sich um eine Schraube (25) handelt.

11. Verbindungsvorrichtung nach Patentanspruch 6 oder 10, **dadurch gekennzeichnet, dass** der Verschiebungsriegel aus einem Teil (40) besteht.

12. Verbindungsvorrichtung nach Patentanspruch 6 oder 10, **dadurch gekennzeichnet, dass** der Verschiebungsriegel aus zwei Teilen (41, 42) besteht, die beiderseits der Ebene (9) der Achsen Ox, Oy angeordnet sind, wobei jedes Teil (41, 42) eine Reihe von Durchtrittslöchern aufweist.

## Claims

1. An assemblage device for assembling an electrically - power assisted steering assembly (10) and an automobile vehicle steering column body assembly (50), the column body assembly (50) comprising a body-tube (2) in which is mounted a steering shaft (1) that turns about a steering axis (3), the column body being mounted on a support assembly (6) that is integral with the structure of the vehicle, **characterized in that** :
- the column body (7) comprises a transverse wall (15) with a transverse assemblage face (16) substantially perpendicular to the steering axis (3) ;
- the electrically - power assisted steering assembly (10) comprises a support face (21) is substantially perpendicular to the steering axis (3) ;
- the assemblage being adjusted along three perpendicular axes Ox, Oy, Oz, the Ox axis being the steering axis (3) that cuts the transverse assemblage face (16) of the column body at point O, the Oz axis being in the vertical plane (8) of the steering axis (3) and the Oy axis being in a plane (9) perpendicular to the vertical plane ;
- a swivel plate (30) is so arranged that it permits double rotation adjustment with respect to the Oy and Oz axes of the assemblage between the column body assembly (50) and said swivel plate (30), and this assemblage with the electrically - power assisted steering assembly (10) ;
- connection means are arranged between the swivel plate (30) and the support face (21) of the electrically - power assisted steering (10) so as to permit double translation adjustment with respect to the Oy and Oz axes of said assemblage ;
- the swivel plate (30) being arranged between the electrically - power assisted steering (10) and the column body (7) ;
- assemblage means (39) are arranged between the transverse wall (15) of the column body (7) and the swivel plate (30) ;
- assemblage means (29, 49), belonging to the connecting means, being arranged between the swivel plate (30) and the support face (21) of the electrically - power assisted steering (10) ;
- so that the axis of the electrically - power assisted steering (10) and the axis of the steering body (50) are perfectly aligned with respect to each other according to the steering axis (3).

2. An assemblage device according to claim 1, **characterized in that** the connection means between the swivel plate (30) and the support face (21) of the electrically - power assisted steering (10) comprises the assemblage means (25) which are arranged between said swivel plate (30) and said support face (21) of the assisted steering (10) so as to permit double translation adjustment with respect to the Oy and Oz axes of said assemblage device.

3. An assemblage device according to claim 1, **characterized in that** the connection means between the swivel plate (30) and the support face (21) of the electrically - power assisted steering (10) comprises :
- a translation spacer (40, 41, 42) with the assemblage means (25, 49) so as to permit double translation adjustment with respect to the Oy and Oz axes of said assemblage device ;
- the translation spacer (40, 41, 42) being disposed between the swivel plate (30) and the electrically - power assisted steering (10).

4. An assemblage device according to claim 2 or 3, **characterized in that** :
- the swivel plate (30) includes on one side (31) a portion having the shape of a spherical crown (32) of Ox axis that surrounds a passage hole (33) for the steering shaft (1) ;
- the assemblage side (16) of the transverse wall 15 comprises a portion in the shape of a spherical crown (17) of Ox axis which surrounds a passage hole (18) for the steering shaft (1) ;
- each of the spherical portion (32, 17) being so arranged as to form spherical cooperation with respect to each other ;
- each spherical portion (32, 17) having at least two passage holes (34, 19) of the assemblage member (39) between the transverse wall (15) and the swivel plate (30) ;
- the passage holes (19, 34) of one (17) of the two spherical portions (17, 32) having a diameter that is larger than the diameter of the corresponding passage holes (34, 19) of the other spherical portion (32, 17) which are adjusted with the diameter of the corresponding assemblage member (39) ;
- this difference in diameter being provided to make it possible to correctly place and fix the swivel plate (30) upon the column body (7) by double rotation adjustment with respect to the Oy and Oz axes.

5. An assemblage device according to claim 2, **characterized in that**:
- the swivel plate (30) includes at least one passage hole (37, 38), the passage holes being disposed on either side of the plane (9) of the Ox and Oy axis ;
- each of the passage holes (37, 38) receiving an assemblage member (25) for the assemblage member (25) of the swivel plate (30) with said support face (21) of the electrically - power assisted steering assembly (10) equipped with a corresponding fixing hole (23),
- the different passage holes (37, 38) of the swivel plate (30) having a diameter that is larger than the diameter of the corresponding assemblage member (25),
- this difference in diameter is provided to make it possible to correctly insert and fix the swivel plate (30) on the electrically - power assisted steering (10) to have double translation adjustment with respect to the Oy and Oz axes.

6. An assemblage device according to claim 3, **characterized in that**:
- the translation spacer (40, 41, 42) having two series of passage holes disposed on either side of the plane (9) of the Ox and Oy axis,
- each series of passage holes includes :
. a centering hole (43, 44) arranged and adjusted according to the Oy, Oz axes with a corresponding centering pin (22) arranged on the support face (21) of the electrically - power assisted steering assembly (10);
. at least one passage hole (45, 46) for the assemblage member 49 of the translation spacer (40, 41, 42) with the swivel plate (30) being equipped with a corresponding passage hole (35, 36) ;
. at least one passage hole (47, 48) that corresponds with the swivel plate (30) with at least one passage hole (37, 38) for the assemblage member (25) of the swivel plate (30) with said support face (21) of the electrically - power assisted steering assembly (10) equipped with a corresponding fixing hole (23) ;
- the different passage holes (35, 36, 37, 38 - 45, 46, 47, 48) of the swivel plate (30) or the translation spacer (40, 41, 42) having a diameter that is larger than the diameter of the corresponding passage holes (45, 46, 47, 48 - 35, 36, 37, 38) of the translation spacer (40, 41, 42) or the swivel plate (30) which are adjusted to the diameter of the corresponding assemblage member (25, 49) ;
- this difference in diameter is provided to make it possible to correctly insert and fix the translation spacer (40, 41, 42) on the swivel plate (30) on the electrically - power assisted steering assembly (10) by double translation adjustment with respect to the Oy and Oz axes.

7. An assemblage device according to claim 4, **characterized in that** the spherical portion (32) of the swivel plate (30) is concave and cooperates with the convex spherical portion (17) of the transverse wall (15) of the column body (16).

8. An assemblage device according to claim 4 or 7, **characterized in that** :
- each spherical portion (17, 32) has 4 passage holes (19, 34) of the assemblage member (39) arranged in a circular and equidistant pattern,
- the passage holes (19) of the spherical portion (17) of the transverse wall (15) have a diameter that is larger than the diameter of the corresponding passage holes (34) of the spherical portion (32) of the swivel plate (30), which are adjusted with a diameter of the corresponding assemblage member consisting of a rivet (39).

9. An assemblage device according to claim 5, **characterized in that** :
- the swivel plate (30) comprises two passage holes (37) on one side of the plane (9) and two passage holes 38 on the other side of the plane (9),
- each of the passage holes (37, 38) receiving an assemblage member (25) of the swivel plate (30) with the support side (21) of the electrically - power assisted steering assembly (10) which is equipped with the four corresponding fixing holes (23),
- the passage holes (37, 38) of the swivel plate (30) having a diameter that is greater than the diameter of the corresponding fixing member consisting of a screw (25).

10. An assemblage device according to claim 6, **characterized in that** each series of passage holes of the translation spacer (40, 41, 42) includes :
- two passage holes (45, 46) for the two assemblage members (49) of the translation spacer (40, 41, 42) with the swivel plate (30) being equipped with two corresponding passage holes (35, 36);
- two passage holes (47, 48) corresponding with the swivel plate (30) with at least two passage holes (37, 38) for the two assemblage members (25) of the swivel plate (30) with the support face (21) of the electrically - power assisted steering assembly (10) equipped with two corresponding fixing holes (23);
- the passage holes (35, 36, 37, 38) of the swivel plate (30) have a diameter that is larger than the diameter of the corresponding passage holes (45, 46, 47, 48) of the translation spacer member (40, 41, 42) which are adjusted to the diameter of the corresponding assemblage member consisting of a rivet (49), and which are adjusted to the diameter of the corresponding fixing member consisting of a screw (25).

11. An assemblage device according to claim 6 or 10, **characterized in that** the translation spacer is one member (40).

12. An assemblage device according to claim 6 or 10, **characterized in that** the translation spacer is made of two members (41, 42) which are disposed on either side of the plane (9) of the Ox, Oy axis, each members (41, 42) comprising one series of passage holes.
